# EUROPEAN PATENT SPECIFICATION

(11) **EP 1 668 231 B1**
(45) Date of publication and mention of the grant of the patent: **31.03.2010**
(21) Application number: 04782343.0
(22) Date of filing: 27.08.2004
(51) Int. Cl.: F01N 3/28

(54) **POLLUTION CONTROL ELEMENT-RETAINING MEMBER AND POLLUTION CONTROL DEVICE**
ABGASENTGIFTUNGSELEMENTHALTEGLIED UND ABGASENTGIFTUNGSSTEUERVORRICHTUNG
ELEMENT DE RETENUE D'ELEMENT ANTI-POLLUTION ET DISPOSITIF ANTI-POLLUTION

(30) Priority: 29.08.2003 JP 2003209807
(43) Date of publication of application: 14.06.2006
(73) Proprietor: 3M Innovative Properties Company, St. Paul MN 55133-3427 (US)
(72) Inventor: KANEKO, Shinichi, Sagamihara, Kanagawa 229-1185 (JP); MIYASAKA, Muneki, Sagamihara, Kanagawa 229-1185 (JP)
(74) Representative: Vossius & Partner
(86) International application number: PCT/US2004/027845
(87) International publication number: WO 2005/021945

(56) References cited:
- EP-A- 0 551 532
- US-A- 5 089 072
- US-A- 5 413 766
- US-A- 5 996 228
- US-A1- 2003 104 189
- PATENT ABSTRACTS OF JAPAN vol. 0082, no. 49 (M-338), 15 November 1984 (1984-11-15) & JP 59 126023 A (TOYOTA JIDOSHA KK), 20 July 1984 (1984-07-20)

## Description

The present invention relates to a pollution control element-retaining or -mounting member, and in more detail to a retaining or mounting member for a pollution control element such as a catalyst carrier and a filter element. In particular, the present invention relates to such a retaining or mounting member that shows good operability during inserting of the retaining member in a state of being wound around a pollution control element into a casing of the pollution control device, that is not separated from the pollution control element during the insertion, and that is excellent in one, some or all of heat resistance, an aerial pressure retaining property and erosion resistance. The present invention also relates to a pollution control device (e.g., a catalytic converter, exhaust cleaning or filter device, etc.) provided with such a pollution control element-retaining member, more particularly, a catalytic converter having inserted therein such a catalyst carrier-retaining member and an exhaust cleaning or filter device provided with a filter element-retaining member. The pollution control device (e.g., catalytic converter) of the present invention can be advantageously used for treating exhaust gases of internal combustion engines of automobiles and other vehicles.

Exhaust gas-purifying systems for which ceramic catalytic converters are used have been well known as means for removing carbon monoxide (CO), hydrocarbons (HC), nitrogen oxide (NOₓ) and the like contained in exhaust gases from the engines of automobiles. A ceramic catalytic converter is fundamentally composed from, for example, a honeycomb-shaped ceramic catalyst carrier (also termed "catalyst element") contained within a metal casing, namely, a housing.

It is well know that there are many types of ceramic catalytic converters. However, a ceramic catalytic converter usually has a structure in which gaps between a catalyst carrier accommodated therein and the casing are fully filled with a heat insulating member typically formed from inorganic fibers, organic fibers and/or generally a liquid or pasty organic binder in combination. See, for example, JP-A-57-61686, JP-A-59-10345, and JP-A-61-239100. As a result, the heat insulating member filling the gaps retains the catalyst carrier, and can prevent the catalyst carrier from accidental mechanical shocks caused by an impact, a vibration or the like. Because neither destruction nor movement of the catalyst carrier takes place in the catalytic converter having such a structure, the catalytic converter can realize a desired action over a long period of time. In addition, because such a heat insulating member as mentioned above has a function of retaining a catalyst carrier, it is commonly called a catalyst carrier-retaining member.

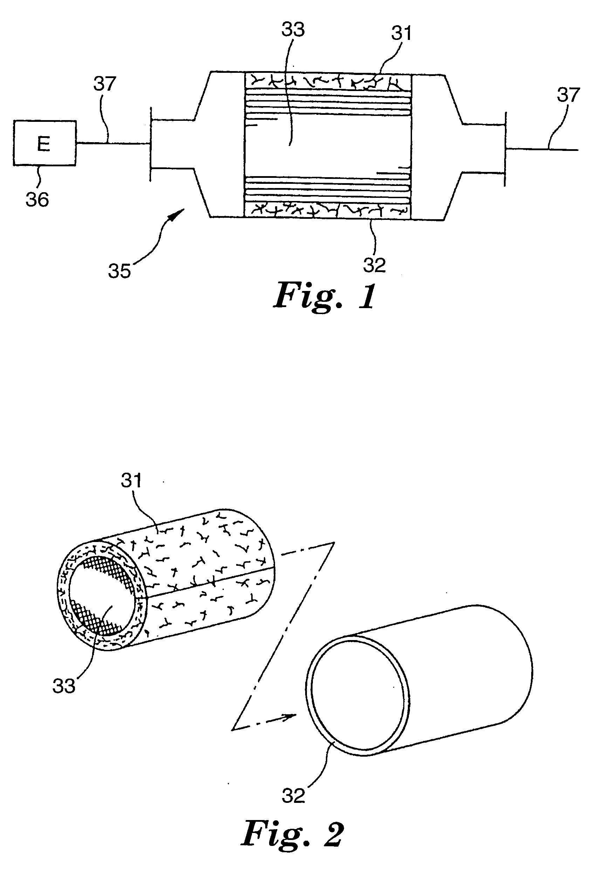

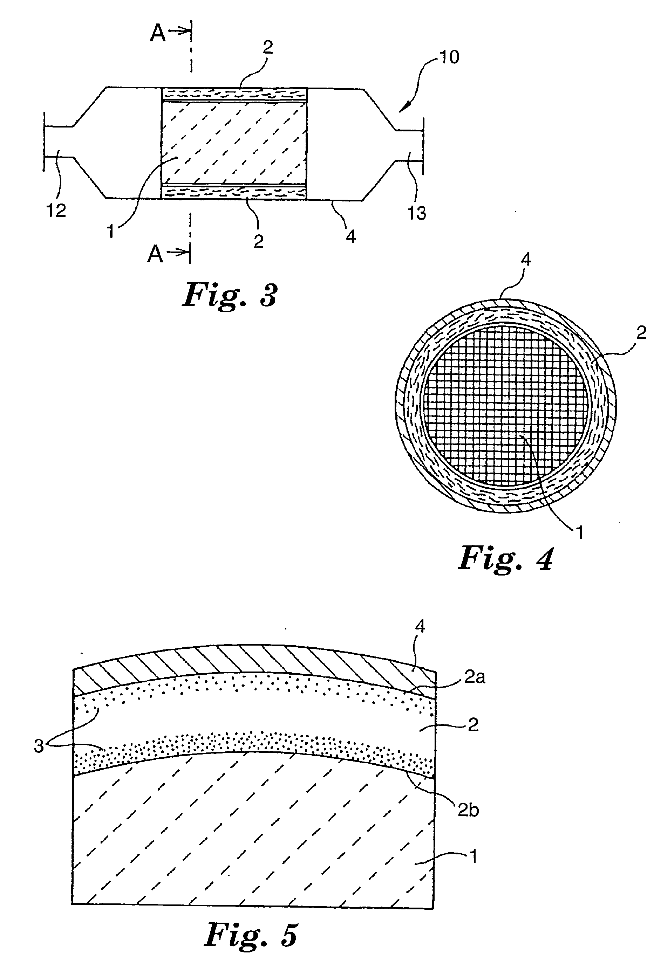

In addition, when the catalyst carrier is to be inserted into the casing, a stuffing system wherein the catalyst carrier-retaining member is wound around the external peripheral surface of the catalyst carrier so that the catalyst carrier and the catalyst carrier-retaining member are integrated, and the integrated body is inserted into the cylindrical casing under pressure, has been commonly adopted. Various types of catalyst carrier-retaining members have currently been proposed in order to improve the operability during inserting (termed "canning") a catalyst carrier by a stuffing system, make better the cushioning property (bulkiness) of the catalyst carrier-retaining member and prevent scattering in air of inorganic fibers forming the catalyst carrier-retaining member. For example, for a catalytic converter 35 comprising a catalyst carrier 33, a metal shell (casing) 32 covering the external periphery of the catalyst carrier 33 and a retention and sealing member (catalyst carrier-retaining member) 31 arranged between the catalyst carrier 33 and the casing 32, as shown in Fig. 1, use of a catalyst carrier-retaining member having the following properties has been proposed in JP-A-2001-259438 (claims, Figs. 1 and 4): it is composed of an inorganic fiber mat needle punched at a density of from 50 to 3,000 punches per 100 cm²; it contains an organic substance with a content of greater than 0 to 2 wt.% or less; and it generates an aerial pressure of from 5 to 500 kPa when heated at temperature of from 300 to 1,000°C at a packing density of from 0.15 to 0.45 g/cm³. The catalytic converter 35 is provided in the midway of an exhaust pipe 37 from an engine 36 of an automobile, as shown in the figure. Moreover, as shown in Fig. 2, the canning process is carried out by pushing the catalyst carrier 33 around which the catalyst carrier-retaining member 31 is wound into the casing 32 under pressure from the opening of the end portion of the casing 32.

Moreover, US-A-5 413 766 discloses a mounting member for mounting a pollution control element (catalyst), comprising a mat which is adhered to the catalyst by means of an acrylic latex adhesive coating and a reaction layer (adhesive/friction controlling agent). During heating of the control element the adhesive coating and the controlling agent are oxidized (decomposed).

WO 00/11098 relates to a mounting material for pollution control devices and to mounting material mats and pads which are manufactured as interconnected elements. Furthermore, a process for mounting a pollution control element in the pollution control device is described.

Furthermore, use of the following catalyst carrier-retaining member in a catalytic converter having a structure similar to that mentioned above has also been proposed in JP-A-2002-4848 (claims, Figs. 1 and 3): the catalyst carrier-retaining member is prepared by adding 0.5 to 20 wt.% of an organic or inorganic binder to a mat-shaped material prepared by arranging inorganic fibers in a mat-like manner; the packing density of the mat-shaped material is adjusted to from 0.1 to 0.6 g/cm³ after incorporation; when the solid component content of the binder added to the mat-shaped material is evaluated in three equally divided portions (upper, middle and lower portions) in the thickness direction, the upper and lower portions each have a high solid component content of the binder in comparison with the middle portion.

For conventional catalytic converters having a stuffed structure, the catalyst carrier-retaining members usually used in the form of mats are variously improved as explained above. However, the operability thereof is still insufficient, and their properties must be improved further. For example, the mats are impregnated or coated with organic binders to improve the bulkiness of the mats and prevent the inorganic fibers from scattering, as explained above. However, because the organic binder contained in the mats causes an adhesion or increase in the coefficient of friction of the mats to the casings in the canning process, and the slipperiness of the mats is lowered, a larger stuffing load is required. Moreover, when the adhesion or friction between each mat and each casing is too strong, slip occurs between each mat and each catalyst carrier around which the mat is wound so that the catalyst carrier cannot be inserted into the casing. Furthermore, because the mat body suffers a large shear stress to deform, collapse of the inorganic fibers takes place. As a result, lowering of the retention and a decrease in the erosion of the inorganic fibers occur.

An object of the present invention, therefore, can be to provide a catalyst carrier-retaining member that shows good operability during inserting the catalyst carrier-retaining member in a state of being wound around a catalyst carrier into the casing of a catalytic converter, that is not separated from the catalyst carrier during the insertion, and that is excellent in one, some or all of heat resistance, an aerial pressure retaining property and erosion resistance.

Further, another object of the present invention can be to provide a catalytic converter which has a simple structure, which can be easily produced, and in which the catalyst canier-retaining member is excellent in one, some or all of heat resistance, an aerial pressure retaining property and erosion resistance.

Furthermore, other objects of the present invention can be to provide a pollution control element-retaining member for mounting pollution control elements other than the catalyst carrier such as, for example, a filter element and the like, and a pollution control device provided with such a pollution control element.

In accordance with the present invention there are provided a mounting member according to claim 1, a pollution control device as defined in claim 12, and an exhaust system of claim 18. The dependent claims relate to individual embodiments of the invention.

The objects described above and other objects of the present invention will be easily understood from the following detailed explanation.

In one aspect of the present invention, a mounting member is provided for mounting a pollution control element within a casing. The mounting member comprises a mat containing inorganic fiber material. The mat has a thickness with an external portion, an internal portion and a middle portion therebetween. The external portion has an external peripheral surface for contacting the casing and the internal portion has an internal peripheral surface for contacting the pollution control element. At least the internal peripheral surface of the internal portion, and the external peripheral surface of the external portion are impregnated with a friction/adhesion controlling agent such that the coefficient of friction between the external peripheral surface and the casing is lower than the coefficient of friction between the internal peripheral surface and the pollution control element. The friction/adhesion controlling agent can decompose and dissipate under operating conditions of the pollution control element.

The friction/adhesion controlling agent with which the internal peripheral surface of the mat is impregnated is the same as the friction/adhesion controlling agent with which the external peripheral surface of the mat is impregnated.

To obtain the desired mounting member characteristics, according to the present invention, it can be preferable for the solid component content of the friction/adhesion controlling agent with which the internal peripheral surface of the mat is impregnated to be larger than that of the friction/adhesion controlling agent with which the external peripheral surface of the mat is impregnated. For example, the solid component content of the friction/adhesion controlling agent with which the internal peripheral surface of the mat is impregnated can be in the range from about 15 to 50 g/m². The solid component content of the friction/adhesion controlling agent with which the external peripheral surface of the mat is impregnated can also be from about 2 to 8 g/m².

Another aspect of the present invention is a pollution control element-retaining member for retaining a pollution control element within a casing by winding the pollution control element-retaining member around the pollution control element, wherein the pollution control element-retaining member is composed of a mat of a fiber material having a predetermined thickness, at least the external peripheral surface on the casing side and the internal peripheral surface on the pollution control element side of the mat are each impregnated with a friction/adhesion controlling agent composed of latex that can be decomposed and dissipated under high temperature conditions, and the solid component content of the friction/adhesion controlling agent with which the internal peripheral surface of the mat is impregnated is larger than that of the friction/adhesion controlling agent with which the external peripheral surface of the mat is impregnated and is in the range from 15 to 50 g/m².

Furthermore, an additional aspect of the present invention is a pollution control device comprising a casing, a pollution control element provided within the casing and a pollution control element-retaining member arranged between the casing and the pollution control element, the pollution control element-retaining member being the one according to the present invention.
Fig. 1 is a cross-sectional view showing the structure of a prior art catalytic converter.
Fig. 2 is a perspective view showing a method of inserting a catalyst carrier in a metal casing in the catalytic converter in Fig. 1.
Fig. 3 is a sectional view showing the structure of the catalytic converter according to the present invention.
Fig. 4 is a cross-sectional view taken along the line A-A of the catalytic converter in Fig. 3.
Fig. 5 is a cross-sectional view showing the impregnated state of a friction/adhesion controlling agent in the catalyst carrier-retaining member in the catalytic converter in Fig. 3.

The pollution control element-retaining member and the pollution control device according to the present invention each can be advantageously practiced in various embodiments. For example, the pollution control element may be a catalyst carrier (or catalyst element), a filter element (for example, exhaust cleaning filter for engines and the like) or any other pollution control elements. Similarly, depending on a pollution control element applied thereto, the pollution control device may be a catalytic converter, an exhaust cleaning device such as exhaust cleaning device for engines (for example, diesel particulate filter device) or any other pollution control devices. Hereinafter, the embodiments of the present invention will be described particularly referring to the catalyst carrier-retaining member and the catalytic converter, however, it should be noted that the present invention is not restricted to only the following embodiments.

The catalytic converter according to the present invention can be particularly advantageously used for treating exhaust gases from internal combustion engines of automobiles and others. The catalytic converter comprises at least a casing and a catalyst carrier (catalyst element) placed within the casing. The catalyst carrier-retaining member according to the present invention that will be explained in detail is inserted between the casing and the catalyst carrier so that the catalyst carrier-retaining member is wound around the external peripheral surface of the catalyst carrier. In addition, for prior art catalytic converters, it has been a common practice to bond a catalyst carrier and a catalyst carrier-retaining member together while bonding means such as an adhesive or a pressure-sensitive adhesive tape is separately inserted or applied therebetween. However, for the catalytic converter of the invention, because the catalyst carrier-retaining member itself can manifest adequate friction or adhesion, the insertion or application of a separate bonding means, which makes the structure and production complicated and increases the production cost, is unnecessary. Moreover, although the catalyst carrier-retaining member is usually wound around a substantially entire surface of the catalyst carrier, it may also be optionally wound around only a part of the catalyst carrier. Furthermore, fixing means such as a wire mesh may optionally be used auxiliarily.

It is preferred that the catalyst carrier-retaining member is suitably compressed so that it has an appropriate bulk density when it is inserted within the casing. The compression procedures include clamshell compression, stuffing compression and Turnikit compression. The catalyst carrier-retaining member of the present invention can be advantageously used for the production of a catalytic converter having a so-called stuffed structure that is formed by a procedure such as stuffing compression, for example, pushing under pressure the catalyst carrier-retaining member into a cylindrical casing. When an openable casing to which clamshell compression can be subjected is used, problems such as friction that arise when the catalyst carrier-retaining member is pushed into a cylindrical casing do not exist.

The catalytic converter of the present invention may include various type ones as long as a stuffed structure is employed therein. The catalytic converter is one equipped with a monolithically formed catalyst element, namely, a monolithic catalytic converter. Because the catalytic converter is composed of a catalyst element having small passages each having a honeycomb-shaped cross section, it is small in comparison with a conventional pellet type catalytic converter, and can suppress the exhaust gas resistance while adequately insuring a contact area with the exhaust gases. The catalytic converter therefore treats exhaust gases more efficiently.

The catalytic converters of the present invention can be advantageously used for treating the exhaust gases in combination with various internal combustion engines. In particular, the catalytic converters can adequately exhibit their excellent action and effects when they are mounted on the exhaust systems of automobiles such as passenger cars, buses and trucks.

Fig. 3 is a side view showing a typical embodiment of the catalytic converter according to the present invention, with the principal portion thereof cross-sectioned for the sake of easy understanding of the structure. Moreover, Fig. 4 is a cross-sectional view of the catalytic converter in Fig. 3 taken along the line A-A. It is understood from these figures that a catalytic converter 10 is equipped with a metal casing 4, a monolithic solid catalyst carrier 1 arranged within the metal casing 4 and a catalyst carrier-retaining member 2 of the invention arranged between the metal casing 4 and the catalyst carrier 1. As will be explained in detail with reference to Fig. 5, the catalyst carrier-retaining member 2 is composed of a mat of a fiber material having a predetermined thickness, at least the external peripheral surface on the casing side and the internal peripheral surface on the catalyst carrier side of the mat being each impregnated with a friction/adhesion controlling agent composed of latex that can be decomposed and dissipated under high temperature conditions, and the solid component content of the friction/adhesion controlling agent with which the internal peripheral surface of the mat is impregnated being larger than that of the friction/adhesion controlling agent with which the external peripheral surface of the mat is impregnated and is in the range from about 15 to 50 g/m². An exhaust gas inlet 12 and an exhaust gas outlet 13 each having a truncated cone shape are attached to the catalytic converter 10.

As explained above, for the catalytic converter 10 of the invention, it is fundamentally unnecessary to use bonding means such as, for example, an adhesive agent or pressure-sensitive adhesive sheet between the catalyst carrier 1 and the catalyst carrier-retaining member 2. However, such bonding means may be auxiliarily used if it exerts no adverse effects on the action and effects of the invention and rather improves the adhesion or friction between the catalyst carrier 1 and the catalyst carrier-retaining member 2, and if the effect of promoting the canning operation can be expected. If used, the bonding means is preferably used only partially. Moreover, although a protective coating is generally unnecessary, the catalyst carrier-retaining member 2 may have a protective coating for protecting the surface from damage.

The catalyst carrier-retaining member is more specifically explained below. The solid catalyst carrier- within the casing is usually composed of a ceramic catalyst carrier having a honeycomb structure with a plurality of exhaust gas passages. The catalyst carrier-retaining member is arranged by winding it around the catalyst carrier. The catalyst carrier-retaining member retains the catalyst carrier within the metal casing and seals gaps formed between the catalyst carrier and the metal casing in addition to its functioning as a heat insulating member. As a result, the catalyst carrier-retaining member prevents exhaust gases from bypassing the catalyst carrier, or at least makes such an undesired flow minimum. Moreover, the catalyst carrier is firmly and elastically supported within the metal casing.

In the catalytic converter of the present invention, the metal casing can be prepared from various metal materials that are known to those skilled in the art, in any arbitrary shape in accordance with desired action, effects, and the like. An appropriate metal casing is made of a stainless steel, and has a shape as shown in Fig. 3. A metal casing having an arbitrary, suitable shape can naturally be prepared optionally from metal such as iron, aluminum or titanium, or an alloy of these metals.

Similarly to the metal casing, the solid catalyst carrier can be prepared from a material that is similar to a material employed in a conventional catalytic converter, in a shape similar to that of the material employed therein. Appropriate catalyst carriers are known to those skilled in the art, and include those produced from metal, ceramics, and the like. Useful catalyst carriers are disclosed in, for example, U.S.-RE-27,747. Moreover, ceramic catalyst carriers are commercially available from, for example, Corning Inc. in the U.S.A. For example, a honeycomb-shaped ceramic catalyst carrier is available from Coming Inc. under the trade name of CELCOR, and another one is available from NGK Insulated Ltd. under the trade name of HONEYCERAM. Metal catalyst carriers are commercially available from, for example, Behr GmbH and Co. in Germany. In addition, for detailed explanations of catalyst monoliths, refer to, for example, the following: SAE Techn. Paper 900,500, "System Approach to Packaging Design for Automotive Catalytic Converters" by Stroom et al.; SAE Techn. Paper 800,082, "Thin Wall Ceramics as Monolithic Catalyst Support" by Howitt; and SAE Techn. Paper 740,244, "Flow Effect in Monolithic Honeycomb Automotive Catalytic Converter" by Howitt et al.

Catalysts to be supported on catalyst carriers explained above are usually metals (such as platinum, ruthenium, osmium, rhodium, iridium nickel and palladium), and metal oxides (such as vanadium pentoxide and titanium dioxide), and are preferably used in the form of coatings. In addition, for a detailed explanation of such a catalyst coating, refer to, for example, U.S.-A- 3,441,381.

In the practice of the present invention, the catalytic converter can be arbitrarily produced in various structures and by various methods as long as the production does not depart from the scope of the present invention. The catalytic converter can be fundamentally prepared by accommodating, for example, a honeycomb-shaped ceramic catalyst carrier in a metal casing. Moreover, for example, the following procedure is particularly appropriate: a catalyst layer (catalyst coating) composed of a noble metal such as platinum, rhodium or palladium is supported on a honeycomb-shaped ceramic monolith to give a final catalyst carrier (catalyst element). Employment of such a structure can manifest effective catalytic action at relatively high temperature.

According to the present invention, the catalyst carrier-retaining member of the invention is arranged between the metal casing and the catalyst element. The catalyst carrier-retaining member is composed of a mat, a blanket or the like of a fiber material having the predetermined thickness. The catalyst carrier-retaining member may be formed from one member, or it may be formed from two or more members which are laminated or bonded. It is usually advantageous for the catalyst carrier-retaining member to have a form such as a mat or a blanket, in view of the handling property. The catalyst carrier-retaining member may optionally have another form. The size of the catalyst carrier-retaining member can be varied in a wide range according to the application. For example, when a mat-shaped catalyst carrier-retaining member is inserted into an automotive catalytic converter, the catalyst carrier-retaining member usually has a mat thickness of from about 1.5 to 15 mm, a width of from about 200 to 500 mm, and a length of from about 100 to 1,500 mm. Such a catalyst carrier-retaining member may optionally be cut with scissors, a cutter or the like to have a desired shape and size.

The catalyst carrier-retaining member is formed from an inorganic fiber material, more preferably from an inorganic fiber material containing alumina fibers. Moreover, although the inorganic fiber material may be used in combination with alumina fibers alone, another inorganic material may further be used in combination. Examples of the usable inorganic material include silica fibers, glass fibers, bentonite, vermiculite and graphite, although the examples are not restricted to those materials mentioned above. These inorganic materials may be used singly, or at least two of them may be mixed and used in combination.

The inorganic fibers forming the catalyst carrier-retaining member preferably comprises inorganic fibers containing alumina (Al₂O₃) and silica (SiO₂). The inorganic fibers used herein comprise two components of alumina fibers and silica fibers, and the mixing ratio of the alumina fibers to the silica fibers are preferably from about 40:60 to 96:4. When the mixing ratio of the alumina fibers to the silica fibers are outside the above range, for example, the mixing ratio is less than 40%, inconvenience such as deterioration of the heat resistance occurs.

Although there is no specific limitation on the thickness (average diameter) of the inorganic fibers, they appropriately have an average diameter of from about 2 to 7 µm.

When the inorganic fibers has an average diameter less than about 2 µm, the fibers are likely to become brittle and have insufficient strength. Conversely, when the inorganic fibers have an average diameter greater than about 7 µm, the catalyst carrier-retaining member tends to be hardly formed.

Furthermore, there is no specific limitation on the length of the inorganic fibers, similarly to the thickness. However, the inorganic fibers appropriately have an average length of from about 0.5 to 50 mm. When the average length of the inorganic fibers are less than about 0.5 mm, the effect of forming the catalyst carrier-retaining member for which the inorganic fibers are used cannot be achieved. Conversely, when the length exceeds about 50 mm, the handling property of the inorganic fibers become poor. As a result, the catalyst carrier-retaining member is hardly produced smoothly.

Alternatively, in the practice of the present invention, an alumina fiber mat mainly composed of a laminated sheet of alumina fibers can also be used advantageously. For such an alumina fiber mat, the average length of the alumina fibers is usually from about 20 to 200 mm, and the thickness (average diameter) of the fibers is usually from about 1 to 40 µm.

The above alumina fiber mat can be produced from a spinning stock solution composed of a mixture of, for example, an alumina source such as aluminum oxychloride, a silica source such as silica sol, an organic binder such as poly(vinyl alcohol) and water. That is, a spun aluminum fiber precursor is laminated to form a sheet, which is then preferably needle punched. The punched sheet is usually baked at temperatures as high as from about 1,000 to 1,300°C.

Needle punching mentioned above usually has the effect of orienting part of the fibers in the direction vertical to the laminated surface. Part of the alumina fiber precursor within the sheet therefore penetrates the sheet and is oriented in the vertical direction to firmly tie the sheet. As a result, the bulk specific gravity of the sheet is increased, and delamination and shifts among the layers are prevented. Although the needle punching density can be varied widely, it is usually from about 1 to 50 punches/cm². The thickness, bulk specific gravity and strength of the mat are adjusted by the needle punching density.

In the production of an alumina fiber mat as explained above, ceramic fibers other than the alumina fibers and inorganic expansive materials may auxiliarily be added to the alumina fibers. In this case, although the additives may be uniformly mixed with the mat, they may also be added so that they are localized while portions to be heated are particularly being avoided. The additives can thus be added at low cost while the properties of the additives are being maintained. Examples of the above ceramic fibers are silica fibers, glass fibers and the like. Examples of the inorganic expansive material are bentonite, expansive vermiculite, expansive graphite and the like.

The catalyst carrier-retaining member according to the present invention is produced by a dry process, whereas conventional catalyst carrier-retaining members were produced by a wet process (including each of the following steps: a step of mixing inorganic fibers and organic fibers; a step of opening inorganic fibers; a step of preparing a slurry; a step of forming by a paper-making procedure; and a step of pressing for forming a formed body). The dry process can be conducted fundamentally by a known and conventional method. Typically, the drying process utilizing needle punching, etc. is advantageous as explained above.

As schematically shown in Fig. 5, the catalyst carrier-retaining member of the present invention is composed of a mat 2 of a fiber material that is inserted between a casing 4 and a catalyst carrier 1 inserted within the casing while the mat is wound around the external peripheral surface of the catalyst carrier 1, and that has a predetermined thickness. At least an external peripheral surface 2a on the side of the casing 4 and an internal peripheral surface 2b on the side of the catalyst carrier 1 of the mat-shaped catalyst carrier-retaining member are impregnated with a friction/adhesion controlling agent 3 that is decomposed and is dissipatable under high temperature conditions. In addition, the term "at least" is used herein, because not only a state in which the catalyst carrier-retaining member 2 is impregnated with the friction/adhesion controlling agent over the entire thickness of the catalyst carrier-retaining member 2 but also a state in which the catalyst carrier-retaining member 2 is partially impregnated therewith, for example, a state in which the catalyst carrier-retaining member 2 is not impregnated therewith in its central portion are included in the scope of the present invention. In addition, the impregnation amount of the friction/adhesion controlling agent 3 usually decreases from the surfaces (external peripheral surface and internal peripheral surface) of the catalyst carrier-retaining member 2 toward the interior, although the amount depends on the method of impregnating the friction/adhesion controlling agent 3.

Furthermore, for impregnation with the friction/adhesion controlling agent 3, precaution must be taken so that there is a difference in the impregnation amount between the side of the external peripheral surface 2a and the side of the internal peripheral surface 2b of the catalyst carrier-retaining member 2. Specifically, for the catalyst carrier-retaining member 2 of the invention, the solid component content of the agent 3 with which the side of the internal peripheral surface 2b is impregnated is larger than that of the agent 3 with which the side of the external peripheral surface 2a is impregnated.

Although there is no specific restriction on the difference of the content of the friction/adhesion controlling agent 3 in the catalyst carrier-retaining member 2, the solid component content of the friction/adhesion controlling agent 3 on the side of the internal peripheral surface 2b of the catalyst carrier-retaining member 2 is preferably from about 15 to 50 g/m², more preferably from about 25 to 50 g/m². On the other hand, the solid component content of the friction/adhesion controlling agent 3 in the peripheral surface 2a of the catalyst carrier-retaining member 2 is usually from about 2 to 8 g/m². In addition, when the solid component content thereof in the catalyst carrier-retaining member 2 is zero, a scattered amount of the fibers increases, and the solid component content is not preferred in view of the operational environment.

The friction/adhesion controlling agent with which the catalyst carrier-retaining member of the invention is impregnated is composed of latex that can be decomposed and dissipated at arbitrary reactions taking place under high temperature condition applicable during operation of the catalytic converter. Usable latex herein includes a colloidal dispersion obtained by dispersing a natural or synthetic polymer material, preferably a resin material such as a butadiene-styrene resin, a polystyrene resin, a poly(vinyl acetate) resin and an acrylic resin into an aqueous medium or another medium, or an organic material such as a poly(vinyl alcohol). Acrylic latex for which an acrylic resin is used can be particularly advantageously used.

Impregnation of the catalyst carrier-retaining member with a friction/adhesion controlling agent, as explained above can be advantageously conducted with known conventional technologies, namely, spraying, coating, an the like. For example, spraying is satisfactorily conducted only by preparing a spray and successively or simultaneously spraying acrylic latex or the like on both sides of the catalyst carrier-retaining member. The operation is therefore simple and economical. The latex or the like subsequent to spraying may be dried naturally or dried by heating to suitable temperature.

According to the present invention, acrylic latex or another friction/adhesion controlling agent is applied to a catalyst carrier-retaining member after preparation so that the impregnation amount on the side of the catalyst carrier differs from that on the side of the casing. As a result, the frictional force or adhesion between the catalyst carrier-retaining member and the catalyst carrier can be adjusted to become larger, and the frictional force between the catalyst carrier-retaining member and the casing is conversely decreased so that the catalyst carrier-retaining member can be made slippery within the casing during canning. Moreover, a stuffing load and a deformation (elongation) of the catalyst carrier-retaining member can consequently be made small. Moreover, because the catalyst carrier-retaining member can be stuffed without deformation, the operability can be significantly improved. Furthermore, because the deformation amount of the catalyst carrier-retaining member is made small, the retention property and erosion resistance of the catalyst carrier-retaining member itself can be greatly improved.

### Examples

The present invention will be further explained with reference to examples. Note that the present invention should not be restricted to the examples.

### Preparation of Catalyst Carrier-Retaining Members (Mat):

Three types of needle punched alumina fiber mats (trade name of MAFTEC, manufactured by Mitsubishi Chemical Functional Products Inc.) each having a mat surface density different from the others were prepared. The alumina fiber mats were each 260 mm long, 90 mm wide and 12.5 mm thick. Both major surfaces of each alumina fiber mat were spray coated with acrylic latex (trade name of "Nipol LX816", manufactured by ZEON Corporation) while a coating amount (based on a solid component) on the surface to be contacted with a catalyst carrier (monolith) was made different from a coating amount on the surface to be contacted with a casing as listed in Table 1. The spray concentration was 8.4%. The alumina fiber mats impregnated with the acrylic latex were placed in an oven, and dried at 130°C for 20 minutes.

Dried alumina fiber mat was wound around the external peripheral surface of a cylindrical monolith body 78 mm in diameter and 100 mm long (manufactured by NGK Insulators, Ltd.) separately prepared. The catalyst carrier around which the alumina fiber mat was wound was stuffed within a cylindrical stainless steel casing 84 mm in inside diameter and 120 mm long with a guide corn at a rate of 40 mmn/sec. In the canning process, a gap between the monolith and the casing was 3 mm.

Similar samples were likewise tested to show the relationship when different friction/adhesion controlling agents (i.e., EVA and acrylic latex) are used on the same mat. The results are summarized in Tables 2 and 3.

During the above canning process, the maximum stuffing load was measured on each alumina fiber mat, and measurement results as summarized in Tables 1, 2 and 3 were obtained. Moreover, when each alumina fiber mat was completely stuffed, the deformation amount (elongation) of the alumina fiber mat inserted within the casing was measured from the end of the casing, and measurement results as summarized in Tables 1, 2 and 3 were obtained.

**Table 1**

| Packing density of mat (g/cm³) | Solid component content of mat surface on casing side (g/m²) | 2 | | 4 | | 8 | | 12 | |
|---|---|---|---|---|---|---|---|---|---|
| | Solid component content of mat surface on monolith side (g/m²) | Stuffing load (N) | Deformation (mm) | Stuffing load (N) | Deformation (mm) | Stuffing load (N) | Defor mation (mm) | Stuffing load (N) | Deformation (mm) |
| 0.27 | 12 | 370 | 2 | 372 | 2 | 392 | 2 | 461 | 3.5 |
| | 25 | 333 | 2 | 343 | 2 | 363 | 2 | 431 | 3 |
| | 50 | 325 | 2 | 343 | 2 | 353 | 2 | 412 | 3 |
| 0.4 | 12 | 1475 | 6 | 1490 | 6.5 | 1490 | 6.5 | 1960 | 8 |
| | 25 | 1390 | 5 | 1411 | 6 | 1421 | 6 | 1803 | 7 |
| | 50 | 1370 | 5 | 1372 | 6 | 1401 | 6 | 1744 | 7 |
| 0.51 | 12 | 2420 | 9 | 2440 | 10 | 2450 | 10 | 3234 | 13 |
| | 25 | 2300 | 9 | 2303 | 9 | 2352 | 9 | 3136 | 11 |
| | 50 | 2247 | 9 | 2254 | 9 | 2352 | 9 | 3087 | 11 |

**Table 2**

| | | | Mat surface of Case side | | | | | | | | |
|---|---|---|---|---|---|---|---|---|---|---|---|
| | | | | Solid wt (g/m²) | | | | | | | |
| | | | | 2 | | 4 | | 8 | | 12 | |
| Mounting Density (g/cm³) | Mat surface of Monolith side | | | Stuffing force | Mat Deformation | Stuffing force | Mat Deformation | Stuffing force | Mat Deformation | Stuffing force | Mat Deformation |
| | Binder | Solid wt. (g/m²) | Binder | (N) | (mm) | (N) | (mm) | (N) | (mm) | (N) | (mm) |
| 0.40 | Acrylic latex | 12 | Acrylic | 1475 | 6 | 1490 | 6.5 | 1490 | 6.5 | 1960 | 8 |
| | | 25 | | 1390 | 5 | 1411 | 6 | 1421 | 6 | 1803 | 7 |
| | | 50 | | 1370 | 5 | 1372 | 6 | 1401 | 6 | 1744 | 7 |
| | | 12 | EVA | 1295 | 5 | 1310 | 5 | 1315 | 5 | 1715 | 7 |
| | | 25 | | 1200 | 5 | 1220 | 5 | 1235 | 5 | 1650 | 7 |
| | | 50 | | 1185 | 4 | 1220 | 4 | 1260 | 5 | 1635 | 7 |

**Table 3**

| | | | Mat surface of Case side | | | | | | | | |
|---|---|---|---|---|---|---|---|---|---|---|---|
| | | | | Solid wt (g/m²) | | | | | | | |
| | | | | 2 | | 4 | | 8 | | 12 | |
| Mounting Density (g/cm³) | Mat surface of Monolith side | | | Stuffing force | Mat Deformation | Stuffing force | Mat Deformation | Stuffing force | Mat Deformation | Stuffing force | Mat Deformation |
| | Binder | Solid wt.(g/m²) | Binder | (N) | (mm) | (N) | (mm) | (N) | (mm) | (N) | (mm) |
| 0.40 | EVA | 12 | Acrylic | 1560 | 6 | 1595 | 7 | 1600 | 7 | 2110 | 9 |
| | | 25 | | 1480 | 6 | 1520 | 7 | 1525 | 7 | 1940 | 9 |
| | | 50 | | 1480 | 6 | 1485 | 6 | 1520 | 7 | 1870 | 9 |
| | | 12 | EVA | 1340 | 5 | 1375 | 5 | 1380 | 5 | 1795 | 7 |
| | | 25 | | 1225 | 5 | 1290 | 5 | 1325 | 5 | 1730 | 7 |
| | | 50 | | 1240 | 5 | 1275 | 5 | 1320 | 5 | 1715 | 7 |

It is understood from the measurement results summarized in Table 1 that the canning operation of an alumina fiber mat can be significantly improved by impregnating the major surfaces of the mat with a friction/adhesion controlling agent so that the impregnation amount of one surface differs from that of the other surface.

In particular, for example, the stuffing load can be optimized and the deformation of the mat can be suppressed by adjusting an impregnation amount of a friction/adhesion controlling agent (e.g., an ethylene vinyl acetate (EVA) or acrylic latex) to about 2 to about 8 g/m² on the casing side of the alumina fiber mat. When an impregnation amount becomes less than about 2 g/m², it can be difficult to prevent scattering of alumina fibers. Conversely, when an impregnation amount of latex becomes, for example, about 12 g/m² or more, the frictional forces or adhesion between the mat and the casing can become too high, and the stuffing load and deformation of the mat can drastically increase in comparison with a case where an impregnation amount is about 8 g/m². A deformation of more than about 7 mm can be too much. Such a deformation can signify (e.g., at a mat density of about 0.4 g/cm³) that the alumina fibers are collapsed and lowering of the retention and erosion resistance is induced by the collapse. In addition, a stuffing load of force of greater than about 1700 kPa can make it very difficult to stuff the mat wrapped monolith into the casing.

Moreover, the frictional forces or adhesion between the mat and monolith can be optimized by adjusting an impregnation amount of the friction/adhesion controlling agent, for example of the EVA or acrylic latex, to about 12 to about 50 g/m² on the monolith side of the alumina fiber mat. Furthermore, use of bonding means such as a pressure-sensitive adhesive tape can therefore be made unnecessary. In contrast, when an impregnation amount of the acrylic latex is less than about 12 g/m², the friction between the mat and the monolith can be so low as to significantly inhibit or prevent the mat wrapped monolith from being stuffed into the casing.

As explained above in detail, the present invention can provide a catalyst carrier-retaining member that shows good operability during inserting the catalyst carrier-retaining member in a state of being wound around a catalyst carrier into the casing of a catalytic converter, that is not separated from the catalyst carrier during the insertion, and that is excellent in heat resistance, an aerial pressure retaining property and erosion resistance

Further, the present invention can provide a catalytic converter in which the inserted catalyst carrier-retaining member is excellent in one or more of heat insulation, retention of the catalyst carrier, and the like.

Furthermore, the present invention can provide catalytic converters that can be advantageously used for treating exhaust gases from internal combustion engines of automobiles and other vehicles.

Moreover, the present invention can also realize the above-described excellent effects in other pollution control devices than the catalytic converter, for example, diesel particulate filter and other exhaust cleaning devices.

## Claims

1. A mounting member (2) for mounting a pollution control element within a casing, said mounting member (2) comprising a mat containing inorganic fiber material, with said mat having a thickness with an external portion, an internal portion and a middle portion therebetween, said external portion having an external peripheral surface for contacting the casing and said internal portion having an internal peripheral surface for contacting the pollution control element, with said mounting member (2) being **characterized by** the internal peripheral surface of said internal portion and the external peripheral surface of said external portion being impregnated with a friction/adhesion controlling agent (3) such that the coefficient of friction between said external peripheral surface and the casing is lower than the coefficient of friction between said internal peripheral surface and the pollution control element, and the friction/adhesion controlling agent (3) with which the internal peripheral surface of said mat is impregnated is the same as the friction/adhesion controlling agent (3) with which the external peripheral surface of said mat is impregnated.

2. A mounting member (2) for mounting a pollution control element within a casing, said mounting member (2) comprising a mat containing inorganic fiber material, with said mat having a thickness with an external portion, an internal portion and a middle portion therebetween, said external portion having an external peripheral surface for contacting the casing and said internal portion having an internal peripheral surface for contacting the pollution control element, with said mounting member (2) being **characterized by** the internal peripheral surface of said internal portion and the external peripheral surface of said external portion being impregnated with a friction/adhesion controlling agent (3) such that the coefficient of friction between said external peripheral surface and the casing is lower than the coefficient of friction between said internal peripheral surface and the pollution control element, and the friction/adhesion controlling agent (3) with which the internal peripheral surface of said mat is impregnated has a solid component content that is larger than that of the friction/adhesion controlling agent (3) with which the external peripheral surface of said mat is impregnated.

3. The mounting member (2) according to claim 2, wherein the friction/adhesion controlling agent (3) with which the internal peripheral surface of said mat is impregnated is different then the friction/adhesion controlling agent (3) with which the external peripheral surface of said mat is impregnated.

4. The mounting member (2) according to claim 1 or 2 or 3, wherein said friction/adhesion controlling agent (3) decomposes and dissipates under operating conditions of the pollution control element.

5. The mounting member (2) according to any one of claims 1 to 4, wherein the friction/adhesion controlling agent (3) with which the internal peripheral surface of said mat is impregnated has a solid component content that is in the range from about 15 to about 50 g/m².

6. The mounting member (2) according to any one of claims 1 to 5, wherein the friction/adhesion controlling agent (3) with which the external peripheral surface of said mat is impregnated has a solid component content that is from about 2 to about 8 g/m².

7. The mounting member (2) according to any one of claims 1 to 6, wherein the friction/adhesion controlling agent comprises an organic material.

8. The mounting member (2) according to any one of claims 1 to 7, wherein the friction/adhesion controlling agent (3) comprises a latex material.

9. The mounting member (2) according to any one of claims 1 to 8, wherein said mat is formed by a dry process.

10. The mounting member (2) according to any one of claims 1 to 9, wherein said middle portion is substantially free of a friction/adhesion controlling agent (3).

11. The mounting member (2) according to any one of claims 1 to 9, wherein said middle portion is completely free of a friction/adhesion controlling agent (3).

12. A pollution control device (10) comprising a casing, a pollution control element (1) provided within said casing (4) and a mounting member (2) according to any one of claims 1 to 11, arranged between said casing (4) and said pollution control element (1), for mounting said pollution control element (1) in said casing (4).

13. The pollution control device (10) according to claim 12, wherein said mat is wrapped around said pollution control element (1), and the external peripheral surface of said mat is impregnated with an amount of friction/adhesion controlling agent (3) such that the force needed to stuff said mat-wrapped pollution control element (1) into said casing (4) is about 1700kPa or less.

14. The pollution control device (10) according to claim 12 or 13, wherein said pollution control device (10) does not include a bonding means, separate from said friction/adhesion controlling agent (3), for providing adequate friction or adhesion between said mounting member (2) and said pollution control element (1).

15. The pollution control device (10) according to any one of claims 12 to 14, wherein said pollution control element (1) is a catalyst carrier, and said pollution control device (10) is a catalytic converter.

16. The pollution control device (10) according to any one of claims 12 to 14, wherein said pollution control element (1) is a filter element, and said pollution control device (10) is an exhaust cleaning device.

17. The pollution control device (10) according to any one of claims 12 to 14, wherein said device (10) is an exhaust cleaning device for internal combustion engines.

18. An exhaust system for an internal combustion engine, said exhaust system comprising a pollution control device (10) according to any one of claims 12 to 17.

## Patentansprüche

1. Befestigungsglied (2) zum Befestigen eines Schadstoffkontrollelementes in einem Gehäuse, wobei das Befestigungsglied (2) eine Matte enthaltend anorganisches Fasermaterial umfasst, wobei die Matte eine Dicke mit einem Außenabschnitt, einem Innenabschnitt und einem dazwischen liegenden Mittelabschnitt aufweist, wobei der Außenabschnitt eine Außenumfangsfläche zum Kontaktieren des Gehäuses aufweist und der Innenabschnitt eine Innenumfangsfläche zum Kontaktieren des Schadstoffkontrollelementes aufweist, wobei das Befestigungsglied (2) **dadurch gekennzeichnet ist, dass** die Innenumfangsfläche des Innenabschnitts und die Außenumfangsfläche des Außenabschnitts mit einem Reibungs-/Haftkontrollmittel (3) derart imprägniert sind, dass der Reibungskoeffizient zwischen der Außenumfangsfläche und dem Gehäuse geringer als der Reibungskoeffizient zwischen der Innenumfangsfläche und dem Schadstoffkontrollelement ist, und das Reibungs-/Haftkontrollmittel (3), mit dem die Innenumfangsfläche der Matte imprägniert ist, das gleiche Reibungs-/Haftkontrollmittel (3) ist, mit dem die Außenumfangsfläche der Matte imprägniert ist.

2. Befestigungsglied (2) zum Befestigen eines Schadstoffkontrollelementes in einem Gehäuse, wobei das Befestigungsglied (2) eine Matte enthaltend anorganisches Fasermaterial umfasst, wobei die Matte eine Dicke mit einem Außenabschnitt, einem Innenabschnitt und einem dazwischen liegenden Mittelabschnitt aufweist, wobei der Außenabschnitt eine Außenumfangsfläche zum Kontaktieren des Gehäuses aufweist und der Innenabschnitt eine Innenumfangsfläche zum Kontaktieren des Schadstoffkontrollelementes aufweist, wobei das Befestigungsglied (2) **dadurch gekennzeichnet ist, dass** die Innenumfangsfläche des Innenabschnitts und die Außenumfangsfläche des Außenabschnitts mit einem Reibungs-/Haftkontrollmittel (3) derart imprägniert sind, dass der Reibungskoeffizient zwischen der Außenumfangsfläche und dem Gehäuse geringer als der Reibungskoeffizient zwischen der Innenumfangsfläche und dem Schadstoffkontrollelement ist, und das Reibungs-/Haftkontrollmittel (3), mit dem die Innenumfangsfläche der Matte imprägniert ist, einen größeren Feststoffkomponentenanteil als das Reibungs-/Haftkontrollmittel (3) hat, mit dem die Außenumfangsfläche der Matte imprägniert ist.

3. Befestigungsglied (2) nach Anspruch 2, wobei sich das Reibungs-/Haftkontrollmittel (3), mit dem die Innenumfangsfläche der Matte imprägniert ist, von dem Reibungs-/Haftkontrollmittel (3) unterscheidet, mit dem die Außenumfangsfläche der Matte imprägniert ist.

4. Befestigungsglied (2) nach Anspruch 1 oder 2 oder 3, wobei sich das Reibungs-/Haftkontrollmittel (3) unter Betriebsbedingungen des Schadstoffkontrollelementes zersetzt und dissipiert.

5. Befestigungsglied (2) nach einem der Ansprüche 1 bis 4, wobei das Reibungs-/Haftkontrollmittel (3), mit dem die Innenumfangsfläche der Matte imprägniert ist, einen Feststoffkomponentenanteil aufweist, der im Bereich von ca. 15 bis ca. 50 g/m² liegt.

6. Befestigungsglied (2) nach einem der Ansprüche 1 bis 5, wobei das Reibungs-/Haftkontrollmittel (3), mit dem die Außenumfangsfläche der Matte imprägniert ist, einen Feststoffkomponentenanteil aufweist, der im Bereich von ca. 2 bis ca. 8 g/m² liegt.

7. Befestigungsglied (2) nach einem der Ansprüche 1 bis 6, wobei das Reibungs-/Haftkontrollmittel ein organisches Material umfasst.

8. Befestigungsglied (2) nach einem der Ansprüche 1 bis 7, wobei das Reibungs-/Haftkontrollmittel (3) ein Latexmaterial umfasst.

9. Befestigungsglied (2) nach einem der Ansprüche 1 bis 8, wobei die Matte durch einen Trockenprozess gebildet ist.

10. Befestigungsglied (2) nach einem der Ansprüche 1 bis 9, wobei der Mittelabschnitt im Wesentlichen frei von Reibungs-/Haftkontrollmittel (3) ist.

11. Befestigungsglied (2) nach einem der Ansprüche 1 bis 9, wobei der Mittelabschnitt völlig frei von Reibungs-/Haftkontrollmittel (3) ist.

12. Schadstoffkontrolleinrichtung (10), umfassend ein Gehäuse, ein Schadstoffkontrollelement (1), das in dem Gehäuse (4) vorgesehen ist, und ein Befestigungsglied (2) nach einem der Ansprüche 1 bis 11, das zwischen dem Gehäuse (4) und dem Schadstoffkontrollelement (1) angeordnet ist, zum Befestigen des Schadstoffkontrollelementes (1) in dem Gehäuse (4).

13. Schadstoffkontrolleinrichtung (10) nach Anspruch 12, wobei die Matte um das Schadstoffkontrollelement (1) gewickelt ist und die Außenumfangsfläche der Matte mit einer solchen Menge an Reibungs-/Haftkontrollmittel (3) imprägniert ist, dass die Kraft, die zum Einbringen des in der Matte eingewickelten Schadstoffkontrollelementes (1) in das Gehäuse (4) benötigt wird, ca. 1700 kPa oder weniger beträgt.

14. Schadstoffkontrolleinrichtung (10) nach Anspruch 12 oder 13, wobei die Schadstoffkontrolleinrichtung (10) kein Verbindungsmittel, separat vom Reibungs-/Haftkontrollmittel (3), zum Bereitstellen von ausreichender Reibung oder Haftung zwischen dem Befestigungsglied (2) und dem Schadstoffkontrollelement (1) enthält.

15. Schadstoffkontrolleinrichtung (10) nach einem der Ansprüche 12 bis 14, wobei das Schadstoffkontrollelement (1) ein Katalysatorträger ist und die Schadstoffkontrolleinrichtung (10) ein katalytischer Umwandler ist.

16. Schadstoffkontrolleinrichtung (10) nach einem der Ansprüche 12 bis 14, wobei das Schadstoffkontrollelement (1) ein Filterelement ist und die Schadstoffkontrolleinrichtung (10) eine Abgasreinigungseinrichtung ist.

17. Schadstoffkontrolleinrichtung (10) nach einem der Ansprüche 12 bis 14, wobei die Einrichtung (10) eine Abgasreinigungseinrichtung für Verbrennungsmotoren ist.

18. Abgassystem für einen Verbrennungsmotor, wobei das Abgassystem eine Schadstoffkontrolleinrichtung (10) nach einem der Ansprüche 12 bis 17 umfasst.

## Revendications

1. Elément de montage (2) qui monte un élément de contrôle de la pollution dans un boîtier, ledit élément de montage (2) comprenant
un mat contenant un matériau en fibres minérales, ledit mat présentant une épaisseur, une partie extérieure, une partie intérieure et entre elles une partie centrale,
ladite partie extérieure présentant une surface périphérique extérieure en contact avec le boîtier et ladite partie intérieure présentant une surface périphérique intérieure en contact avec l'élément de contrôle de la pollution,
ledit élément de montage (2) étant **caractérisé en ce que**
la surface périphérique intérieure de ladite partie intérieure et la surface périphérique extérieure de ladite partie extérieure sont imprégnées d'un agent (3) de contrôle de friction et/ou de l'adhérence de telle sorte que le coefficient de friction entre ladite surface périphérique extérieure et le boîtier soit inférieur au coefficient de friction entre ladite surface périphérique intérieure et l'élément de contrôle de la pollution et
**en ce que** l'agent (3) de contrôle de la friction et/ou de l'adhérence duquel la surface périphérique intérieure dudit mat est imprégnée est identique à l'agent (3) de contrôle de la friction et/ou de l'adhérence duquel la surface périphérique extérieure dudit mat est imprégnée.

2. Elément de montage (2) qui monte un élément de contrôle de la pollution dans un boîtier, ledit élément de montage (2) comprenant
un mat contenant un matériau en fibres minérales, ledit mat présentant une épaisseur, une partie extérieure, une partie intérieure et entre elles une partie centrale,
ladite partie extérieure présentant une surface périphérique extérieure en contact avec le boîtier et ladite partie intérieure présentant une surface périphérique intérieure en contact avec l'élément de contrôle de la pollution,
ledit élément de montage (2) étant **caractérisé en ce que**
la surface périphérique intérieure de ladite partie intérieure et la surface périphérique extérieure de ladite partie extérieure sont imprégnées d'un agent (3) de contrôle de friction et/ou de l'adhérence de telle sorte que le coefficient de friction entre ladite surface périphérique extérieure et le boîtier soit inférieur au coefficient de friction entre ladite surface périphérique intérieure et l'élément de contrôle de la pollution et
**en ce que** l'agent (3) de contrôle de la friction et/ou de l'adhérence duquel la surface périphérique intérieure dudit mat est imprégnée a une teneur en composant solide supérieure à celle de l'agent (3) de contrôle de la friction et/ou de l'adhérence duquel la surface périphérique extérieure dudit mat est imprégnée.

3. Elément de montage (2) selon la revendication 2, dans lequel l'agent (3) de contrôle de la friction et/ou de l'adhérence duquel la surface périphérique intérieure dudit mat est imprégnée est différent de l'agent (3) de contrôle de la friction et/ou de l'adhérence duquel la surface périphérique extérieure dudit mat est imprégnée.

4. Elément de montage (2) selon les revendications 1 ou 2 ou 3, dans lequel ledit agent (3) de contrôle de la friction et/ou de l'adhérence se décompose et se dissipe lorsque l'élément de contrôle de la pollution est en conditions de fonctionnement.

5. Elément de montage (2) selon l'une des revendications 1 à 4, dans lequel l'agent de contrôle de la friction et/ou de l'adhérence duquel la surface périphérique intérieure dudit mat est imprégnée présente une teneur en composants solides comprise dans la plage d'environ 15 à environ 50 g/m².

6. Elément de montage (2) selon l'une quelconque des revendications 1 à 5, dans lequel l'agent (3) de contrôle de la friction et/ou de l'adhérence duquel la surface périphérique extérieure dudit mat est imprégnée présente une teneur en composant solide comprise entre environ 2 et environ 8 g/m².

7. Elément de montage (2) selon l'une quelconque des revendications 1 à 6, dans lequel l'agent de contrôle de la friction et/ou de l'adhérence contient un matériau minéral.

8. Elément de montage (2) selon l'une quelconque des revendications 1 à 7, dans lequel l'agent (3) de contrôle de la friction et/ou de l'adhérence contient un matériau de latex.

9. Elément de montage (2) selon l'une quelconque des revendications 1 à 8, dans lequel ledit mat est formé par une opération à sec.

10. Elément de montage (2) selon l'une quelconque des revendications 1 à 9, dans lequel ladite partie centrale est essentiellement exempte d'agent (3) de contrôle de la friction et/ou de l'adhérence.

11. Elément de montage (2) selon l'une quelconque des revendications 1 à 9, dans lequel ladite partie centrale est complètement exempte d'agent (3) de contrôle de la friction et/ou de l'adhérence.

12. Dispositif (10) de contrôle de la pollution comprenant un boîtier, un élément (1) de contrôle de la pollution prévu à l'intérieur dudit boîtier (4) et un élément de montage (2) selon l'une quelconque des revendications 1 à 11, agencé entre ledit boîtier (4) et ledit élément (1) de contrôle de la pollution pour monter ledit élément (1) de contrôle de la pollution dans ledit boîtier (4).

13. Dispositif (10) de contrôle de la pollution selon la revendication 12, dans lequel ledit mat est enroulé autour dudit élément (1) de contrôle de la pollution et dans lequel la surface périphérique extérieure dudit mat est imprégnée d'une quantité d'agent (3) de contrôle de la friction et/ou de l'adhérence telle que la force nécessaire pour enfoncer ledit élément (1) de contrôle de la pollution en mat enroulé dans ledit boîtier (4) est d'environ 1 700 kPa ou moins.

14. Dispositif (10) de contrôle de la pollution selon les revendications 12 ou 13, dans lequel ledit dispositif (10) de contrôle de la pollution ne contient pas de moyen de liaison distinct de l'agent (3) de contrôle de la friction et/ou de l'adhérence pour assurer une friction ou une adhérence adéquates entre ledit élément de montage (2) et ledit élément (1) de contrôle de la pollution.

15. Dispositif (10) de contrôle de la pollution selon l'une quelconque des revendications 12 à 14, dans lequel ledit élément (1) de contrôle de la pollution est un support de catalyseur et dans lequel ledit dispositif (10) de contrôle de la pollution est un convertisseur catalytique.

16. Dispositif (10) de contrôle de la pollution selon l'une quelconque des revendications 12 à 14, dans lequel ledit élément (1) de contrôle de la pollution est un élément de filtre et en ce que ledit dispositif (10) de contrôle de la pollution est un dispositif d'épuration des gaz d'échappement.

17. Dispositif (10) de contrôle de la pollution selon l'une quelconque des revendications 12 à 14, dans lequel ledit dispositif (10) est un dispositif d'épuration des gaz d'échappement d'un moteur à combustion interne.

18. Système d'échappement pour moteur à combustion interne, ledit système d'échappement comprenant un dispositif (10) de contrôle de la pollution selon l'une quelconque des revendications 12 à 17.
